# EUROPEAN PATENT APPLICATION

(11) **EP 4 810 185 A1**
(43) Date of publication of application: **23.09.2026**
(21) Application number: 23848699.7
(22) Date of filing: 21.12.2023
(51) Int. Cl.: B23K 20/02, B23K 20/12

(54) **ROTARY FRICTION WELDING MACHINE AND METHOD OF OPERATING A ROTARY FRICTION WELDING MACHINE**

(71) Applicant: Berkoa, S.Coop., 20870 Elgoibar (Gipuzkoa) (ES); LORTEK S. COOP., 20240 Ordizia (Gipuzkoa) (ES)
(72) Inventor: AROCENA OSA, Jose Antonio, 20870 ELGOIBAR (GIPUZKOA) (ES); RAMIREZ ESNAOLA, Jose, 20870 ELGOIBAR (GIPUZKOA) (ES); GARRIDO NUÑEZ, Maria Jose, 20870 ELGOIBAR (GIPUZKOA) (ES); HUERTOS IZQUIERDO, Francisco Javier, 20240 ORDIZIA (GIPUZKOA) (ES); RODRIGUEZ VAZQUEZ, Jonatan, 20240 ORDIZIA (GIPUZKOA) (ES); ALDANONDO BEGIRISTAIN, Egoitz, 20240 ORDIZIA (GIPUZKOA) (ES)
(74) Representative: Galbaian S.Coop.
(86) International application number: PCT/ES2023/070772
(87) International publication number: WO 2025/133413

(57) **Abstract**

Rotary friction welding machine comprising a rotation device (100) comprising a motor (2) and a spindle (6) driven by the motor (2) and adapted to rotate a first workpiece (A), and a forging device (200) adapted to move a second workpiece (B) and to press it against the first workpiece (A) until the two workpieces (A, B) are welded. The shaft (7) of the spindle (6) is coupled by at least one bearing (10) to an intermediate support (25) which is coupled by at least one other bearing (11) to a main support (20) of the rotary device (100) so that, in a first mode of operation of the machine (1), the shaft (7) rotates with respect to the intermediate support (25) and the main support (20) and, in a second mode of operation, the intermediate support (25) rotates together with the shaft (7). Operation of the machine.

## Description

### TECHNICAL FIELD

The present invention relates to a rotary friction welding machine and an operating method of the rotary friction welding machine.

### PRIOR ART

Friction welding of two workpieces is a process known in the prior art in which two workpieces are joined together using pressure and the application of heat. One of the workpieces is rotated about its longitudinal axis by a motor while the other workpiece is moved towards the motor-rotated workpiece and pressure is applied to soften the contact surface. The motor is then braked and a higher pressure is applied to the workpieces, melting the materials in the contact zone. Finally, the contact zone cools and the weld solidifies.

US 2018/0036834 A1 discloses a friction welding machine as defined in the preamble of claim 1.

### DISCLOSURE OF THE INVENTION

The object of the invention is to provide a rotary friction welding machine adapted to weld two workpieces, and a method of welding two workpieces by rotary friction as defined in the claims.

A first aspect of the invention relates to a rotary friction welding machine comprising a rotating device adapted to rotate a first workpiece, the rotating device comprising a motor and a spindle having a shaft driven by the motor and adapted to rotate the first workpiece, and a forging device adapted to move a second workpiece into contact with the first workpiece and to press the second workpiece against the first workpiece until both workpieces are partially melted and welded.

The spindle shaft is coupled via at least one bearing to an intermediate support. The intermediate support is in turn coupled by at least one bearing to a main support of the rotary device so that in a first mode of operation of the machine the spindle shaft rotates with respect to the intermediate support and the main support and in a second mode of operation of the machine the intermediate support rotates together with the spindle shaft.

Thus, when the rotary friction welding machine is in the first mode of operation, only the bearing coupled to the shaft is operative, while the bearing coupled to the main support is blocked, whereas when the rotary friction welding machine is in the second mode of operation, only the bearing coupled to the main support is operative, the intermediate support and the shaft rotating together without the possibility of relative rotation between them, and therefore the operation of the bearing coupled to the shaft is blocked.

Another aspect of the invention relates to a method of operating the rotating friction machine in which, depending on the type of workpiece to be welded, the first mode of operation of the machine or the second mode of operation of the machine is selected. In other words, depending on the geometry, dimensions and material of the workpieces, the machine must operate within a certain range of speeds and forging pressures in order to carry out friction welding. Depending on the required speeds and pressures, the machine determines which bearings to use.

The great advantage of this machine is that it can weld small and large sections of the same type of workpiece on the same machine, i.e. it can work with workpieces of a much wider range of dimensions than the state of the art machines, which are limited to working with workpieces of a reduced range of dimensions.

### DESCRIPTION OF THE DRAWINGS

Figure 1 shows a perspective sectional view of an embodiment of a rotary friction welding machine according to the invention.
Figure 2 shows a longitudinal section of the rotary friction welding machine according to the invention.
Figure 3 shows a detail C of a spindle of the welding machine shown in Figure 2 in a first mode of operation.
Figure 4 shows a front view of the spindle of the welding machine shown in Figure 1 in the first mode of operation.
Figure 5 shows another partial sectional view of the spindle of the welding machine shown in Figure 1 in the first mode of operation, in which some elements have been hidden for ease of understanding.
Figure 6 shows a perspective view of a locking element of the welding machine shown in Figure 1.
Figure 7 shows a sectional view of the locking element of the welding machine shown in Figure 1.
Figure 8 shows a front view of the spindle of the welding machine shown in Figure 1 in a second mode of operation.
Figure 9 shows a partial sectional view of the spindle of the welding machine shown in Figure 1 in a second mode of operation.
Figure 10 shows another sectional view of the spindle of the welding machine shown in Figure 1 in the second mode of operation.
Figures 11a and 11b schematically show a drive means of the welding machine shown in Figure 1.

### DETAILED DISCLOSURE OF THE INVENTION

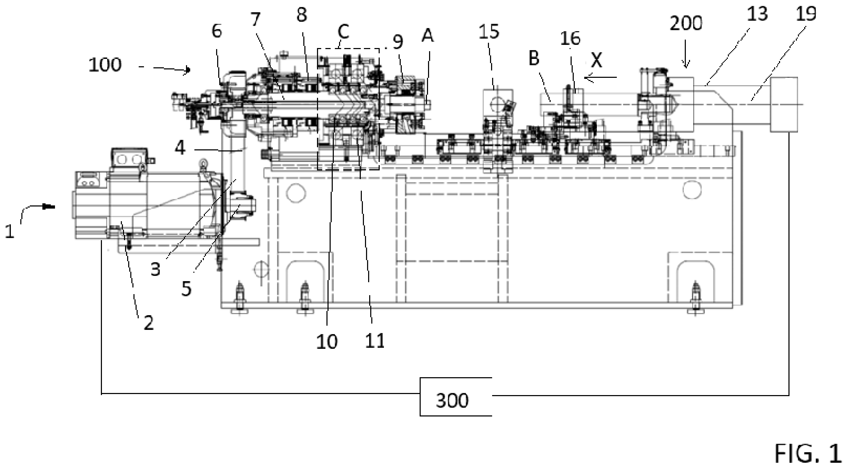

An aspect of the invention relates to a rotary friction welding machine 1 as shown in Figure 1, comprising a rotating device 100 configured to rotate a first workpiece A, the rotating device 100 comprising a motor 2, a spindle 6 coupled to the motor 2, and a jaw plate 9 coupled to an axis 7 of the spindle 6 and adapted to grip the first workpiece A, the motor 2 being adapted to rotate the axis 7 of the spindle 6, which in turn rotates the jaw plate 9.

The spindle 6 further comprises at least one brake 8 at least partially surrounding the axis 7. Each brake 8 is adapted to decelerate the shaft 7 to a stop during the braking phase of the friction welding process. In a preferred embodiment, the brake 8 is a friction brake.

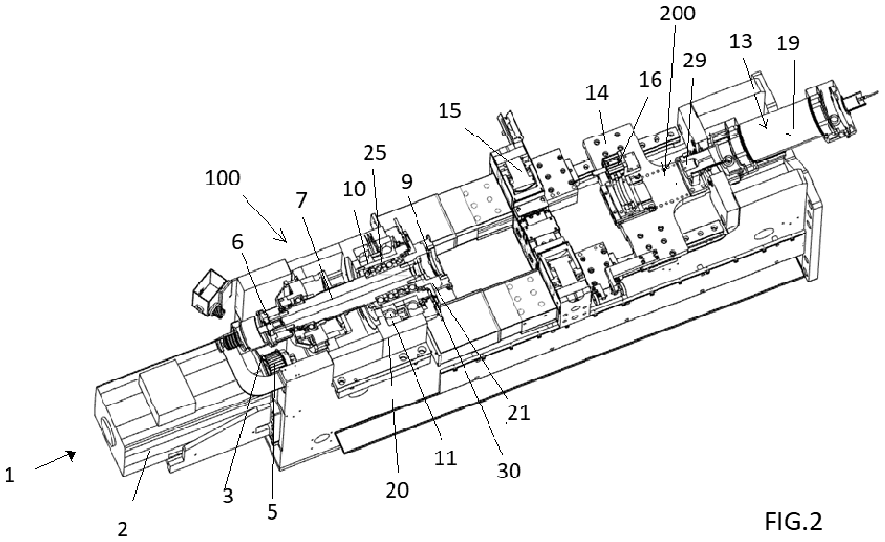

In an embodiment as shown in Figures 1 and 2, the spindle 6 is coupled to the motor 2 via transmission means 3. The transmission means 3 comprise pulleys 5 coupled respectively to the shaft 7 of the spindle 6 and to a shaft of the motor 2, the pulleys being coupled together by means of a belt 4.

On the other hand, the rotary friction welding machine 1 also comprises a forging device 200 adapted to bring a second workpiece B into contact with the first workpiece A and to press the second workpiece B against the first workpiece A until the two workpieces A and B are partially melted and welded.

The rotary friction welding machine 1 also comprises control means 300, shown schematically in Figure 1, configured to control the rotational speed of the spindle 6 and the pressure exerted on the second workpiece B.

The spindle 6 is supported on a main support 20 of the rotary device 100. The shaft 7 of the spindle 6 is coupled via at least one bearing 10 (hereinafter first bearing) to an intermediate support 25 which is in turn coupled via at least one bearing 11 (hereinafter second bearing) to the main support 20, so that in a first mode of operation of the machine, the shaft 7 of the spindle 6 rotates with respect to the intermediate support 25 and the main support 20, and in a second mode of operation of the machine, the intermediate support 25 rotates together with the shaft 7 of the spindle 6. That is to say, when the rotary friction welding machine 1 is in the first mode of operation, only the first bearing 10 comes into operation, while the second bearing 11 is locked, whereas when the rotary friction welding machine 1 is in the second mode of operation, only the second bearing 11 comes into operation, the intermediate support 25 and the shaft 7 rotating together, with no possibility of relative rotation, and therefore the first bearing 10 is locked.

In an embodiment as shown in the figures, the shaft 7 of the spindle 6 is coupled to the intermediate support 25 by means of a plurality of first bearings 10, the intermediate support 25 being coupled to the main support 20 by means of a plurality of second bearings 11, the plurality of second bearings 11 surrounding the plurality of first bearings 10. In a preferred embodiment, the number of second bearings 11 used is less than the number of first bearings 10.

In an embodiment as shown in the figures, each first bearing 10 or bearing coupled to the shaft 7 is a high-speed bearing and each second bearing 11 or bearing coupled to the main support 20 is a low-speed bearing. Preferably, each first bearing 10 is also a high load capacity bearing and each second bearing 11 is a low load capacity bearing.

"High-speed bearings" means bearings operating at speeds up to 3000 rpm.

"Low-speed bearings" are bearings operating at speeds below 1500 rpm.

"High Load Capacity Bearings" are bearings which can carry a maximum load of 60 tons of pressure.

"Low load capacity bearings" are bearings that can support a maximum load of 20 tons of pressure.

The friction welding machine 1 comprises locking means 30 configured to lock one of the operating modes of the machine so that the machine 1 can be operated in the other operating mode. Thus, the locking means 30 can lock either the first operating mode or the second operating mode of the machine 1, allowing the machine 1 to operate in an unlocked operating mode.

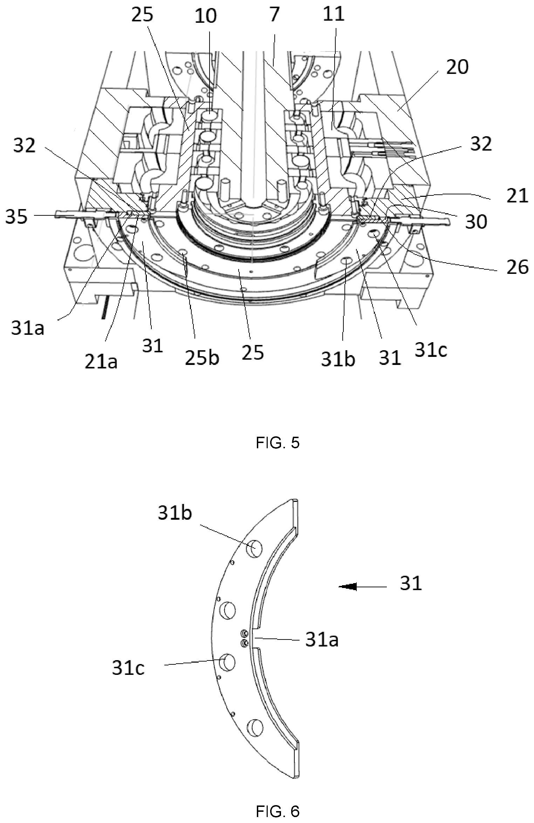

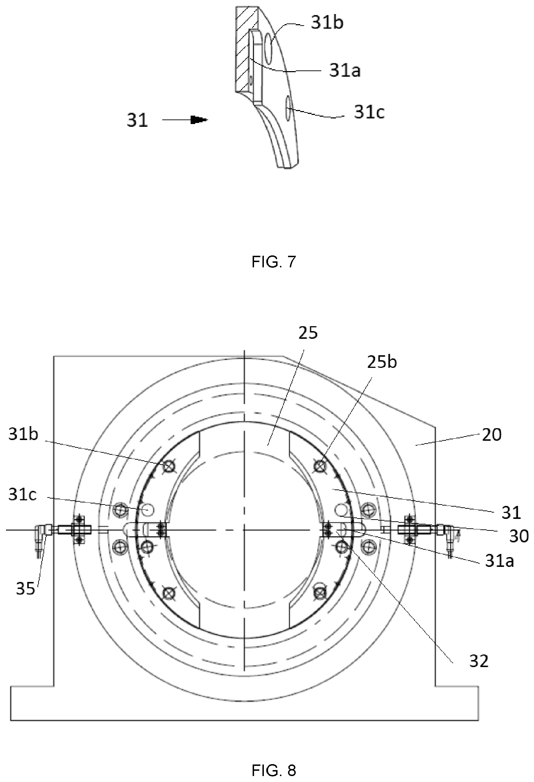

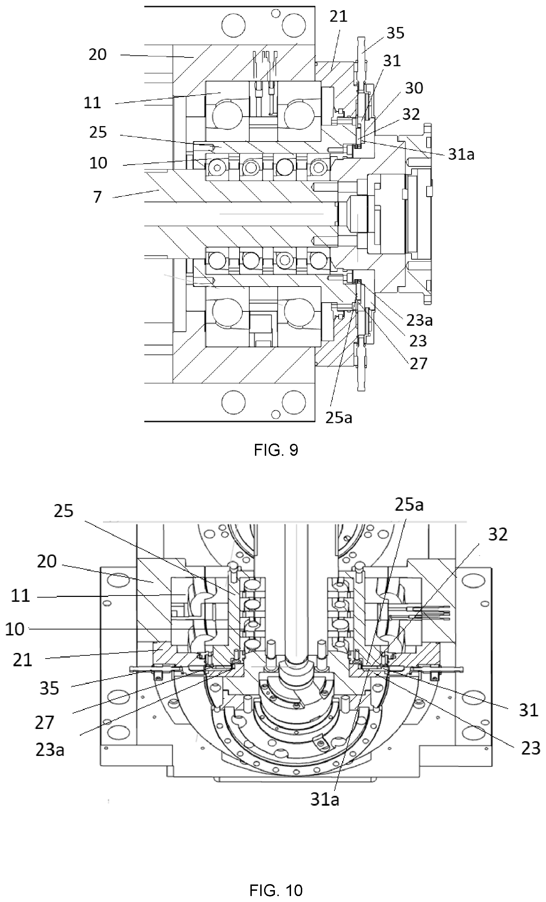

In an embodiment shown in the figures, the locking means 30 comprise at least one connecting element 31 which, in the first mode of operation of the machine 1 shown in figures 1 to 5, is arranged fixed to the main support 20 (the position of the connecting element 31 is called the first position), the connecting element 31 being held against the intermediate support 25 by a locking element 32. The connecting element 31 is fixed to the main support 20 without any possibility of rotation. In the second mode of operation of the machine, shown in figures 8 to 10, the connecting element 31 is arranged fixed to the intermediate support 25 (the position of the connecting element 31 is called the second position), the connecting element 31 being held against the intermediate support 25 and against the shaft 7 of the spindle 6 by means of the locking element 32, so that the shaft 7 and the intermediate support 25 are firmly coupled without any possibility of rotation relative to each other.

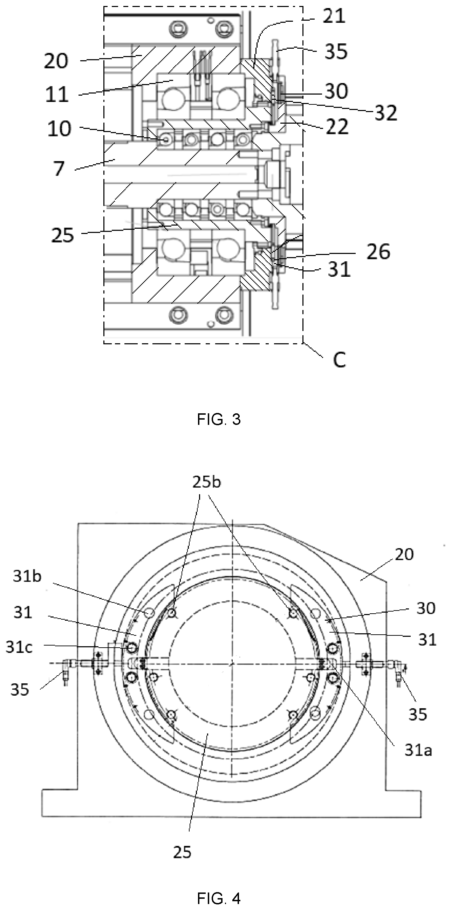

In an embodiment as shown in the figures, in the first position of the connecting element 31 shown in figures 3 to 5, said connecting element 31 is fixed (without any possibility of rotation) to the main support 20 by a coupling 21. Preferably, in the first position, the connecting element 31 is screwed 31b, 21b to the coupling 21.

The connecting element 31 and the coupling 21 comprise a respective recess 31a, 21a which, when the connecting element 31 is positioned in the first position, define a housing 26 in which the locking element 32 is inserted, the locking element 32 projecting with respect to the housing 26 in order to contact and hold the intermediate support 25 against the coupling 21 without any possibility of rotation.

In an embodiment as shown in the figures, in the second position of the connecting element 31 shown in figures 8 to 10, the connecting element 31 is fixed to the intermediate support 25 without any possibility of relative rotation with respect to the intermediate support 25. In particular, the connecting element 31 is screwed 31b, 25b to the intermediate support 25.

The intermediate support 25 comprises a recess 25a such that, when the connecting element 31 is positioned in the second position, the recess 25a of the intermediate support 25 together with the recess 31a of the connecting element 31 define a housing 27 in which the locking element 32 is housed, the locking element 32 projecting with respect to the housing 27 such that the locking element 32 keeps the intermediate support 25 coupled to the shaft 7 of the spindle 6 without any possibility of relative rotation. In particular, the intermediate support 25 is fixed to the shaft 7 by means of a coupling 23, for which purpose the coupling 23 comprises a recess 23a in which the locking element 32 is partially housed and which retains the coupling 23 with respect to the intermediate support 25. The coupling 23 is a substantially annular coupling.

In an embodiment as shown in the figures, the locking element 32 is a pin.

In an embodiment as shown in the figures, the locking means 30 comprise two connecting elements 31, each in the form of a sector, arranged diametrically opposite each other.

In an embodiment as shown in the figures, the friction welding machine 1 comprises positioning means 35 adapted to detect whether the machine 1 is in the first operating mode or in the second operating mode. The positioning means 35 comprise a sensor arranged to detect the presence of the connecting element 31 when it is in the first position. If it does not detect the presence of the connecting element 31, this is because the connecting element 31 is in the second position.

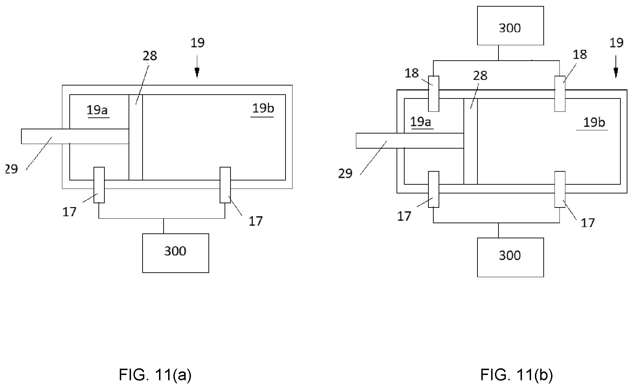

On the other hand, the forging device 200 shown in Figures 1 and 2 comprises drive means 13 configured to move the second workpiece B in a longitudinal direction X parallel to the spindle 6 by bringing it closer to the first workpiece A and to exert pressure on the second workpiece B. The forging device 200 comprises a fixed clamp 15 and a sliding clamp 14 adapted to grip the second workpiece B, the sliding clamp 14 being fixed to a sliding support 16 adapted to support the second workpiece B and to move it in the longitudinal direction X under the control of the drive means 13. The drive means 13 comprise a hydraulic cylinder 19 adapted to act on the second workpiece B and a first pressure switch package 17 (shown schematically in figure 11a). By "pressure switch package" is meant at least one pair of pressure switches adapted to operate in the same pressure/force range of the hydraulic cylinder in the friction and forging stage. The hydraulic cylinder 19 shown schematically in Figures 11a and 11b comprises two chambers 19a and 19b separated by a piston 28 coupled to a piston rod 29 adapted to exert pressure on the second workpiece B, wherein a pressure switch of the pressure switch package 17 is arranged in each chamber 19a and 19b such that when a predetermined pressure is reached in the respective chamber 19a and 19b, the corresponding pressure switch 17 opens or closes an electrical contact of the electrical circuit supplying the hydraulic cylinder 19.

In a preferred embodiment, the rotary friction welding machine 1 comprises a second pressure switch package 18 (schematically shown in Figure 11b), each of which is arranged in one of the chambers 19a and 19b of the hydraulic cylinder 19. Each pressure switch assembly is adapted to operate in specific pressure/force ranges. In this way, the machine 1 can operate over a wide range of forging forces/pressures while minimizing the full scale errors of the pressure switches, i.e. the measurement errors that are accentuated when the pressure switch operates at pressures close to the maximum and minimum pressures of the pressure range. Thus, the first pressure switch package 17 is adapted to operate at low or medium pressures, where low or medium pressures are understood to be pressures below 160 bar. The second pressure switch assembly 18 is adapted to operate at medium or high pressures, medium or high pressures being understood as pressures up to 315 bar.

On the other hand, the workpieces A and B can be of any type, size and material that can withstand friction welding. Preferably, workpieces A and B are workpieces of revolution and, more preferably, cylindrical workpieces. Preferably, workpieces A and B are metal workpieces, and more preferably steel workpieces. Preferably, both workpieces A and B are of the same material, but they can also be of different materials.

The friction welding machine 1 can work with workpieces A and B of a wide range of dimensions, materials, and geometries. Friction welding machine 1 can operate at low speeds and high forging forces/pressures or at high speeds and low forging forces/pressures.

"High pressures/forces" means forces greater than 20 tons and up to a maximum of 60 tons,

"Low pressures/forging forces" means forces below 20 tons.

A further aspect of the invention is a method of operating the rotary friction welding machine 1 described so far. The method of operating the rotary friction welding machine according to the invention comprises a first step in which the first mode of operation of the machine 1 or the second mode of operation of the machine 1 is selected according to the type of workpieces A and B to be welded. Depending on the workpieces A and B to be welded, the control means 300 check whether the locking means 30 are correctly positioned to operate the first or first bearings 10 or the second or second bearings 11. To this end, they check the signal received from the positioning means 35. If necessary, the operator correctly positions the locking means 30 to operate the machine 1 in the first or second mode of operation.

The operation of the rotary friction welding machine 1 comprises the following stages:
- a contact stage, in which the second workpiece B is moved, actuated by the drive means 13, until it comes into contact with the first workpiece A,
- a friction stage in which the actuating means 13 increase the pressure exerted on the second workpiece B until a pressure/friction force is reached which is maintained for a period of time so as to cause softening of the contact surface of the two workpieces A and B due to the heat generated,
- a braking stage in which the rotation of the spindle shaft 7 of the spindle 6 is braked, and
- a forging stage in which a forging pressure/force is applied to the second workpiece B for a time by the drive means 13, thereby melting the materials in the contact area of both workpieces A and B, the forging pressure/force being higher than the friction pressure.

The aspects and characteristics described for machine 1 and not described for the method are also valid and applicable to this method. Similarly, the aspects and characteristics described for the method and not described for the machine are also valid and applicable to this machine.

## Claims

1. Rotary friction welding machine adapted to weld two workpieces (A, B), comprising:
- a rotating device (100) configured to rotate a first workpiece (A), the rotating device (100) comprising a motor (2) and a spindle (6) having a shaft (7) driven by the motor (2) and adapted to rotate the first workpiece (A); and
- a forging device (200) configured to move a second workpiece (B) until it contacts the first workpiece (A) and to press the second workpiece (B) against the first workpiece (A) until it partially melts and welds both workpieces (A, B), and
wherein the shaft (7) of the spindle (6) is coupled by at least one bearing (10) to a support, **characterised in that** the support is an intermediate support (25) coupled by at least one bearing (11) to a main support (20) of the rotary device (100) so that in a first mode of operation of the machine (1), the shaft (7) of the spindle (6) rotates with respect to the intermediate support (25) and the main support (20), and in a second mode of operation of the machine (2), the intermediate support (25) rotates together with the shaft (7) of the spindle (6).

2. Rotary friction welding machine according to the preceding claim, wherein the shaft (7) of the spindle (6) is coupled to the intermediate support (25) by means of a plurality of bearings (10), the intermediate support (25) being coupled to the main support (20) by means of a plurality of bearings (11), the plurality of bearings (11) coupling the intermediate support (25) to the main support (20) surrounding the plurality of bearings (10) coupling the shaft (7) to the intermediate support (25).

3. Rotary friction welding machine according to the preceding claim, wherein each bearing (10) coupled to the shaft (7) is a high-speed bearing, each bearing (11) coupled to the main support (20) is a low speed bearing.

4. Rotary friction welding machine according to any of the preceding claims, comprising locking means (30) configured to lock the first mode of operation or the second mode of operation of the machine (1), allowing the machine (1) to operate in the second mode of operation or the first mode of operation, respectively.

5. Rotary friction welding machine according to the preceding claim, wherein the locking means (30) comprise at least one connecting element (31) which, in the first operating mode of the machine, is arranged in a first position fixed to the main support (20), a locking element (32) holding the connecting element (31) against the intermediate support (25) so that the main support (20) and the intermediate support (25) are engaged, and in the second operating mode, the connecting element (31) is held against the intermediate support (25), the locking element (32) holding the connecting element (31) against the intermediate support (25) so that the main support (20) and the intermediate support (25) are engaged, and, in the second mode of operation of the machine, the connecting element (31) is arranged in a second position fixed to the intermediate support (25), the locking element (32) holding the connecting element (31) against the intermediate support (25) and the shaft (7) of the spindle (6) so that the shaft (7) and the intermediate support (25) are coupled.

6. Rotary friction welding machine according to the previous claim, wherein the connecting element (31) and the intermediate support (25) comprise a respective recess (31a, 25a) defining a housing (27) in which the locking element (32) is housed in the second mode of operation of the machine, the locking element (32) projecting with respect to the housing (27) so that the locking element (32) keeps the intermediate support (25) coupled to the shaft (7) of the spindle (6) without the possibility of relative rotation.

7. Rotary friction welding machine according to the preceding claim, wherein the spindle (6) is coupled to the main support (20) by means of a coupling (21) fixed to the main support (20), the coupling (21) comprising a recess (21a) which, together with the recess (31a) of the connecting element (31), defines a housing (26) in which the locking element (32) is housed in the first mode of operation of the machine, the locking element (32) projecting with respect to the housing (26) in order to hold the intermediate support (25) against the coupling (21).

8. Rotary friction welding machine according to any of claims 5 to 7, wherein the locking member (32) is a pin.

9. Rotary friction welding machine according to any of claims 5 to 8, wherein the locking means (30) comprise two connecting elements (31), each in the form of a sector, arranged diametrically opposite one another.

10. Rotary friction welding machine according to any of claims 5 to 9, comprising positioning means (35) adapted to detect whether the machine is operating in the first or in the second mode of operation.

11. Rotary friction welding machine according to the preceding claim, wherein the positioning means (35) comprise at least one sensor arranged to detect the positioning of the connecting element (31) in the first position.

12. Rotary friction welding machine according to any of the preceding claims, wherein the drive means (13) comprises a hydraulic cylinder (19) having two chambers (19a, 19b) separated by a piston (20), and a first pressure switch package (17) comprising at least one pair of pressure switches adapted to operate in the same pressure/force range of the hydraulic cylinder (20), each pressure switch (17) of the pressure switch assembly being housed in one of the chambers (19a, 19b).

13. Rotary friction welding machine according to the preceding claim, wherein said drive means (13) comprises a second pressure switch package (18) comprising at least one pair of pressure switches housed in each of said chambers (19a, 19b), the pressure/force range of said second pressure switch assembly (18) being different from the pressure/force range of said first pressure switch assembly (17).

14. Method of operating a rotary friction welding machine according to any of the preceding claims, wherein the first machine operating mode (1) or the second machine operating mode (1) is selected depending on the type of workpieces (A, B) to be welded.
